# EUROPEAN PATENT APPLICATION

(11) **EP 2 519 066 A1**
(43) Date of publication of application: **31.10.2012**
(21) Application number: 11360016.7
(22) Date of filing: 28.04.2011
(51) Int. Cl.: H04W 68/00

(54) **Idle state user equipment**

(71) Applicant: Alcatel Lucent, 75007 Paris (FR)
(72) Inventor: Godin, Philippe, 78220 Viroflay (FR); Palat, Sudeep K, Swindon Wiltshire, SN5 6EE (GB)
(74) Representative: Leppard, Andrew John

(57) **Abstract**

Methods, a base station, a user equipment method, user equipment and computer program products are disclosed. The station method comprises, at a base station, the steps of: (i) in response to a request to determine presence of idle state user equipment within a cell provided by the base station, transmitting a first message within the cell, the first message encoding an indication to the idle state user equipment to commence a truncated radio resource connection (RRC) setup procedure; (ii) determining presence of the idle state user equipment from a second message received from the idle state user equipment commencing the truncated radio resource connection (RRC) setup procedure; and (iii) in response to the second message, terminating the truncated radio resource connection (RRC) setup procedure to prevent a connection with a core network being established. In this way, it can be seen that it is possible to cause idle state user equipment to begin a radio resource connection (RRC) setup procedure to enable the presence of that idle state user equipment to be indicated to the base station without causing, for example, the S1 interface to be configured.

## Description

### FIELD OF THE INVENTION

The present invention relates to methods, a base station, user equipment and computer program products.

### BACKGROUND

Wireless telecommunications systems are known. In those known systems, radio coverage is provided to user equipment, for example mobile telephones, by geographical areas known as cells. A base station is located in each cell to provide the radio coverage. User equipment in each cell receives information and data from the base station and transmits information and data to the base station.

Information and data transmitted by the base station to the user equipment occurs on channels of radio carriers known as downlink carriers. Information and data transmitted by user equipment to the base station occurs on uplink data channels of radio carriers known as uplink carriers.

In order to preserve resources within the wireless telecommunications system, user equipment may operate in one of two radio resource connection (RRC) states. In the "connected" state, resources can be allocated to enable user equipment to initiate or receive an active call or to transfer data between the user equipment and those base stations providing cell coverage to the user equipment. However, when not actively engaged in an active call or in data transfer, the user equipment may enter an "idle" state in order to free up resources and preserve battery power. When in the idle state, no radio resources are dedicated to the user equipment to support communication with the base station, which enables those resources to be allocated to other user equipment.

Although this approach enables a greater efficiency in the allocation of finite resources to those user equipment within the wireless telecommunications system which most require them, unexpected consequences can occur.

Accordingly, it is desired to provide an improved technique for interacting with idle state user equipment.

### SUMMARY

According to a first aspect, there is provided a method, comprising, at a base station, the steps of: (i) in response to a request to determine presence of idle state user equipment within a cell provided by the base station, transmitting a first message within the cell, the first message encoding an indication to the idle state user equipment to commence a truncated radio resource connection (RRC) setup procedure; (ii) determining presence of the idle state user equipment from a second message received from the idle state user equipment commencing the truncated radio resource connection (RRC) setup procedure; and (iii) in response to the second message, terminating the truncated radio resource connection (RRC) setup procedure to prevent setup of a connection with a core network.

The first aspect recognises that it is often useful to determine whether there is user equipment within a cell which is currently in the idle state. It will be appreciated that when the user equipment is in the idle state, no active connection is maintained between the user equipment and the base station. That is to say, no RRC context exists between the user equipment and the base station. Although it may be possible to attempt to infer whether user equipment in the idle state is within the cell provided by the base station, such inferences may be unreliable because user equipment in idle state are typically tracked by the network at a tracking area granularity, which normally consists of a number of cells. Accordingly, when it is necessary to determine whether or not it is appropriate for a base station to perform a particular operation or provide a service which may be influenced by the number of user equipment within a cell (and in particular the number of idle state user equipment), a reliable determination of whether to perform that operation can be difficult to make.

The first aspect also recognises that if it is not possible to make a reliable determination of the number of user equipment within a cell, then it may be necessary for the network provider to err on the side of caution and make a decision to perform the operation or provide the service on the assumption that sufficient idle state user equipment may be present. Such an approach may over-allocate resources for non-existent user equipment or for user equipment that have no interest in receiving the service when those resources are not required to be allocated. This reduces the flexibility in resource allocation within the network.

Accordingly, a base station method is provided. The method may comprise the step of transmitting a first message within a cell in response to a request to determine the presence of idle state user equipment within that cell. The first message may encode an indication to the idle state user equipment which may cause the idle state user equipment to commence a truncated RRC setup procedure. The presence of idle state user equipment may then be determined from a second message which is received from the idle state user equipment when performing the truncated RRC setup procedure. In order to prevent a complete RRC setup procedure from occurring, the truncated RRC setup procedure is terminated on receipt of the second message which may prevent a connection with a core network being established. It will be appreciated that such a connection may be established between the base station and other network nodes such as, for example, a mobility management entity and/or a serving gateway. Typically, such connections occur over an S1 interface between the base station and the core network. Truncating the RRC setup procedure prevents any S1 interface set-up from occurring.

In this way, it can be seen that it is possible to cause idle state user equipment to begin an RRC setup procedure to enable the presence of that idle state user equipment to be indicated to the base station. However, the first aspect recognises that it is unnecessary and undesirable to perform the complete RRC setup procedure simply to determine the number of idle state user equipment within a cell, since the complete RRC setup procedure causes resources to be allocated within the base station to support communication over an S1 interface with another network node such as, for example, a mobility management entity (MME) and/or a serving gateway and also involves several signalling messages to set up security and a default bearer which involves additional processing resources at the nodes which requires higher capacity nodes or could cause overload. The allocation of such resources is particularly unnecessary if it is not yet necessary for the user equipment to transition out of the idle state. If this is the case, then any resources allocated to support the S1 interface would then need to be released. It will be appreciated that this would result in the unnecessary allocation and release of resources whenever it is required to count idle state user equipment and causes associated unnecessary messaging. Accordingly, instead, the truncated RRC setup procedure may be terminated following receipt of the second message from the responding idle state user equipment, prior to the S1 interface being configured.

In one embodiment, the step (i) comprises the step of, in response to a request to determine presence of idle state user equipment within a cell requiring provision of at least one service to be provided by the base station, transmitting the first message within the cell, the first message encoding an indication of the at least one service to be provided to the idle state user equipment and the step (ii) comprises the step of determining presence of the idle state user equipment requiring provision of the at least one service from the second message. The embodiment recognises that in release 10 of 3GPP, the counting function has been introduced in order to help Multimedia Broadcast/Multicast Service Coordination Entity (MCE) equipment to decide whether or not to start a multimedia broadcast single frequency network (MBSFN) transmission. The MCE triggers the user equipment to start counting in their cells and if the number of user equipment found is large enough, it decides to operate in MBSFN mode. In release 10 the base stations only count connected mode mobiles which are interested to receive a given MBMS service or already receiving it over unicast. However this counting is not very accurate because it doesn't take into account the idle state mobiles. But if the MCE makes a wrong estimation of interested users through inaccurate counting, this can result in waste of radio resources e.g. MCE starting MBSFN whereas only one user equipment is interested or the MCE deciding not to start MBSFN if the count was low resulting in inefficiency caused by many users trying to receive the service over unicast. It would be therefore necessary to count the idle state mobiles as well. One approach is to have the MME trigger some paging of idle state mobiles, asking some of them to get connected if they are interested to receive MBMS. However this solution is not good enough because when user equipment responds to a paging from the MME, it gets RRC connected and base station contexts and S1 contexts are created in the base station, including the creation of at least one default bearer per user equipment. Also the MME is heavily involved whereas the release 10 counting was only involving the radio access network (RAN) in general and the MCE in particular.

Accordingly, the request may be associated with a service which is intended to be provided to user equipment. That is to say, the request may be a request to establish whether idle state user equipment may require the provision of such a service, such as for example an MBMS. The first message may then encode an indication of the service which is intended to be provided to the idle state user equipment. Should a second message then be received, this may indicate that the responding idle state user equipment would indeed require the provision of the indicated service. The total number of responses can then be counted. In this way, it can be seen that a reliable determination can be made of whether the total number of user equipment within a cell may require the provision of a service. That total number of user equipment may be all the active user equipment which may communicate their desire to receive the service in accordance with conventional messaging techniques, as well as those idle state user equipment within the cell which may otherwise not be able to provide such an indication without performing a complete RRC setup procedure, together with the associated resource implications. Accordingly, a reliable determination can be made by the network of whether sufficient demand for the service exists within the cell.

In one embodiment, the service comprises a multimedia broadcast provided by a multimedia broadcast single frequency network (MBSFN). The network may determine whether sufficient demand for the multimedia broadcast service exists within the cell by counting the number of responses and determine whether it is more efficient to provide such a broadcast as a multicast service within the cell or whether it is more efficient to provide a number of unicast services.

In one embodiment, the first message comprises an indication that another channel provides the indication of the at least one service to be provided to the idle state user equipment. Accordingly, the first message may not itself provide details of the services, but may instead indicate that the information relating to the services may be found on another channel. It will be appreciated that such an approach enables an indication to be provided within any limited space provided within an existing message, with the details of the services being provided on a channel which is able to support the service details. For example, the first message may indicate that the information relating to the services may be found on an associated multicast control channel (MCCH).

In one embodiment, the method comprises the step of transmitting on the another channel the indication of the at least one service to be provided to the idle state user equipment.

In one embodiment, the second message comprises a random access channel RACH message having a pre-allocated preamble indicating commencement of the truncated radio resource connection (RRC) setup procedure. Accordingly, the second message received from the idle state user equipment may comprise a RACH message. The RACH message may be encoded to have a pre-allocated preamble which indicates that the truncated RRC setup procedure has been commenced. It will be appreciated that the number of RACH preambles available for such pre-allocation is limited, but that this approach may be utilised in some circumstances. Utilising a pre-allocated or predetermined preamble within the RACH message provides for a particularly simple mechanism to enable idle state user equipment to signal their presence to the base station in response to the first message.

In one embodiment, the step (iii) comprises the step of terminating the truncated radio resource connection (RRC) setup procedure in response to receipt of the RACH message having the pre-allocated preamble. Accordingly, the truncated RRC setup procedure may be terminated very early upon receipt of the RACH message having the pre-allocated preamble. Such an approach provides for the signalling of the presence of the user equipment with very few messages, since both the user equipment and the base station will terminate the truncated RRC setup procedure at that stage.

In one embodiment, the second message comprises a radio resource connection (RRC) connection request message encoding an indication that the radio resource connection (RRC) connection request message was generated in response to the first message. Accordingly, the second message may comprise an RRC connection request message which provides an indication that the RRC connection request message was sent in response to the first message. It will be appreciated that this may be provided using a different type of RRC connection request message. Again, it will be appreciated that this provides for a particularly simple technique for signalling the presence of the idle state user equipment using existing messages.

In one embodiment, the indication encoded in the radio resource connection (RRC) connection request message comprises a pre-allocated cause value. Accordingly, a cause value within the RRC connection request message may be pre-allocated to indicate that the RRC connection request message was sent by idle state user equipment in response to the first message sent by the base station. Again, using the cause value provides for a simple mechanism for communicating the presence of the idle state user equipment to the base station.

In one embodiment, the step (iii) comprises the step of terminating the truncated radio resource connection (RRC) setup procedure by transmitting a radio resource connection (RRC) connection reject message in response to receipt of the radio resource connection (RRC) connection request message encoding the indication that the radio resource connection (RRC) connection request message was generated in response to the first message. Accordingly, following receipt of the RRC connection request message, the base station may terminate the truncated RRC setup procedure through the transmission of an RRC connection reject message. Again, it will be appreciated that this enables the truncated RRC setup procedure to be terminated at an early stage and avoids the proliferation of unnecessary messages and the allocation of unnecessary resources.

In one embodiment, the second message comprises a radio resource connection (RRC) setup complete message encoding an indication that the radio resource connection (RRC) setup complete message was generated in response to the first message. Accordingly, the second message may comprise an RRC set-up message which encodes an indication that the RRC set-up message was sent in response to the first message. Again, this provides a simple and convenient mechanism for communicating the presence of the idle state user equipment to the base station.

In one embodiment, the step (i) comprises the step of, in response to a request to determine presence of idle state user equipment within a cell requiring provision of a plurality of services to be provided by the base station, transmitting the first message within the cell, the first message encoding an indication of the plurality of services to be provided to the idle state user equipment, and wherein the indication encoded in the radio resource connection (RRC) setup complete message comprises an indication of those of the plurality of services required by the idle state user equipment. Accordingly, the first message may encode an indication of more than one service which may be provided to the idle state user equipment and the RRC set-up complete message may provide an indication of which of those services may be required by the idle state user equipment. It will be appreciated that greater scope exists within an RRC set-up complete message to provide an indication of the services that may be required by the idle state user equipment.

In one embodiment, the step (iii) comprises the step of terminating the truncated radio resource connection (RRC) setup procedure by transmitting a radio resource connection (RRC) connection release message in response to receipt of the radio resource connection (RRC) setup complete message encoding the indication that the radio resource connection (RRC) setup complete message was generated in response to the first message. Accordingly, an RRC connection release message may be transmitted to terminate the truncated RRC setup procedure. Again, sending an RRC connection release message terminates the truncated RRC setup procedure early and enables the presence of the idle state user equipment to be indicated to the base station with fewer messages than using a complete RRC setup procedure and avoids the need to send further messages or to allocate unnecessary resources which may then need to be unallocated. This avoids needing to set up the S1 connection or to contact the MME.

In one embodiment, the first message comprises a paging message.

According to a second aspect, there is provided a base station, comprising: transmission logic operable, in response to a request to determine presence of idle state user equipment within a cell provided by the base station, to transmit a first message within the cell, the first message encoding an indication to the idle state user equipment to commence a truncated radio resource connection (RRC) setup procedure; determining logic operable to determine presence of the idle state user equipment from a second message received from the idle state user equipment commencing the truncated radio resource connection (RRC) setup procedure; and termination logic operable, in response to the second message, to terminate the truncated radio resource connection (RRC) setup procedure to prevent a connection with a core network being established.

In one embodiment, the transmission logic is operable, in response to a request to determine presence of idle state user equipment within a cell requiring provision of at least one service to be provided by the base station, to transmit the first message within the cell, the first message encoding an indication of the at least one service to be provided to the idle state user equipment and the determining logic is operable to determine presence of the idle state user equipment requiring provision of the at least one service from the second message.

In one embodiment, the service comprises a multimedia broadcast provided by a multimedia broadcast single frequency network (MBSFN).

In one embodiment, the first message comprises an indication that another channel provides the indication of the at least one service to be provided to the idle state user equipment.

In one embodiment, the transmission logic is operable to transmit on the channel the indication of the at least one service to be provided to the idle state user equipment.

In one embodiment, the second message comprises a random access channel RACH message having a pre-allocated preamble indicating commencement of the truncated radio resource connection (RRC) setup procedure.

In one embodiment, the termination logic is operable to terminate the truncated radio resource connection (RRC) setup procedure in response to receipt of the RACH process message having the pre-allocated preamble.

In one embodiment, the second message comprises a radio resource connection (RRC) connection request message encoding an indication that the radio resource connection (RRC) connection request message was generated in response to the first message.

In one embodiment, the indication encoded in the radio resource connection (RRC) connection request message comprises a pre-allocated cause value.

In one embodiment, the termination logic is operable to terminate the truncated radio resource connection (RRC) setup procedure by transmitting a radio resource connection (RRC) connection reject message in response to receipt of the radio resource connection (RRC) connection request message encoding the indication that the radio resource connection (RRC) connection request message was generated in response to the first message.

In one embodiment, the second message comprises a radio resource connection (RRC) setup complete message encoding an indication that the radio resource connection (RRC) setup complete message was generated in response to the first message.

In one embodiment, the transmission logic is operable, in response to a request to determine presence of idle state user equipment within a cell requiring provision of a plurality of services to be provided by the base station, to transmit the first message within the cell, the first message encoding an indication of the plurality of services to be provided to the idle state user equipment, and wherein the indication encoded in the RRC setup complete message comprises an indication of those of the plurality of services required by the idle state user equipment.

In one embodiment, the termination logic is operable to terminate the truncated radio resource connection (RRC) setup procedure by transmitting a radio resource connection (RRC) connection release message in response to receipt of the radio resource connection (RRC) setup complete message encoding the indication that the radio resource connection (RRC) setup complete message was generated in response to the first message.

In one embodiment, the first message comprises a paging message.

According to a third aspect, there is provided a method, comprising, at user equipment, the steps of: (i) receiving a first message encoding an indication to commence a truncated radio resource connection (RRC) setup procedure; (ii) commencing the truncated radio resource connection (RRC) setup procedure; and (iii) transmitting a second message indicating commencement of the truncated radio resource connection (RRC) setup procedure.

In one embodiment, the first message encodes an indication of at least one service to be provided to the user equipment, the method comprising the step of determining whether the user equipment requires provision of the at least one service and, if so, then performing the steps (ii) and (iii).

In one embodiment, the service comprises a multimedia broadcast provided by a multimedia broadcast single frequency network (MBSFN).

In one embodiment, the first message comprises an indication that another channel provides the indication of the at least one service to be provided to the idle state user equipment, the method comprising the step of receiving the indication of the at least one service from the another channel.

In one embodiment, the second message comprises a random access channel RACH message having a pre-allocated preamble indicating commencement of the truncated radio resource connection (RRC) setup procedure.

In one embodiment, the method comprises the step of terminating the truncated radio resource connection (RRC) setup procedure following transmission of the RACH message having the pre-allocated preamble.

In one embodiment, the second message comprises a radio resource connection (RRC) connection request message encoding an indication that the radio resource connection (RRC) connection request message was generated in response to the first message.

In one embodiment, the indication encoded in the radio resource connection (RRC) connection request message comprises a pre-allocated cause value.

In one embodiment, the method comprises the step of terminating the truncated radio resource connection (RRC) setup procedure following receipt of a radio resource connection (RRC) connection reject message.

In one embodiment, the second message comprises a radio resource connection (RRC) setup complete message encoding an indication that the radio resource connection (RRC) setup complete message was generated in response to the first message.

In one embodiment, the first message encodes an indication of a plurality of services to be provided to the user equipment, the method comprising the step of determining whether the user equipment requires provision of at least one of the plurality of services and, if so, then the indication encoded in the radio resource connection (RRC) setup complete message comprises an indication of those of the plurality of services required by the idle state user equipment.

In one embodiment, the method comprises the step of terminating the truncated radio resource connection (RRC) setup procedure following receipt of a radio resource connection (RRC) connection release message.

In one embodiment, the first message comprises a paging message.

According to a fourth aspect, there is provided user equipment comprising: reception logic operable to receive a first message encoding an indication to commence a truncated radio resource connection (RRC) setup procedure; radio resource connection logic operable to commence the truncated radio resource connection (RRC) setup procedure in response to receipt of the first message; and transmission logic operable to transmit a second message indicating commencement of the truncated radio resource connection (RRC) setup procedure.

In one embodiment, the first message encodes an indication of at least one service to be provided to the user equipment and the radio resource connection logic is operable to determine whether the user equipment requires provision of the at least one service and, if so, is operable to commence the truncated radio resource connection (RRC) setup procedure.

In one embodiment, the service comprises a multimedia broadcast provided by a multimedia broadcast single frequency network (MBSFN).

In one embodiment, the first message comprises an indication that another channel provides the indication of the at least one service to be provided to the idle state user equipment and the reception logic is operable to receive the indication of the at least one service from the another channel.

In one embodiment, the second message comprises a random access channel RACH message having a pre-allocated preamble indicating commencement of the truncated radio resource connection (RRC) setup procedure.

In one embodiment, the radio resource connection logic is operable to terminate the truncated radio resource connection (RRC) setup procedure following transmission of the RACH message having the pre-allocated preamble.

In one embodiment, the second message comprises a radio resource connection (RRC) connection request message encoding an indication that the radio resource connection (RRC) connection request message was generated in response to the first message.

In one embodiment, the indication encoded in the radio resource connection (RRC) connection request message comprises a pre-allocated cause value.

In one embodiment, the radio resource connection logic is operable to terminate the truncated radio resource connection (RRC) setup procedure following receipt of a radio resource connection (RRC) connection reject message.

In one embodiment, the second message comprises a radio resource connection (RRC) setup complete message encoding an indication that the radio resource connection (RRC) setup complete message was generated in response to the first message.

In one embodiment, the first message encodes an indication of a plurality of services to be provided to the user equipment and the wherein the radio resource connection logic is operable to determine whether the user equipment requires provision of at least one of the plurality of services and, if so, then the indication encoded in the radio resource connection (RRC) setup complete message comprises an indication of those of the plurality of services required by the idle state user equipment.

In one embodiment, the radio resource connection logic is operable to terminate the truncated radio resource connection (RRC) setup procedure following receipt of a radio resource connection (RRC) connection release message.

In one embodiment, the first message comprises a paging message.

According to a fifth aspect, there is provided a computer program product operable to perform the method steps of one of the first and the third aspects.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 illustrates the main components of a telecommunications network according to one embodiment;
Figure 2 illustrates the main message flow of a conventional RRC setup connection procedure;
Figure 3 illustrates provision of multimedia broadcast within the wireless telecommunications network;
Figure 4 illustrates the general message flow when attempting count idle state user equipment according to one embodiment; and
Figures 5 to 7 illustrate example arrangements showing the truncated RRC setup procedure according to embodiments.

### DESCRIPTION OF THE EMBODIMENTS

### Network Overview

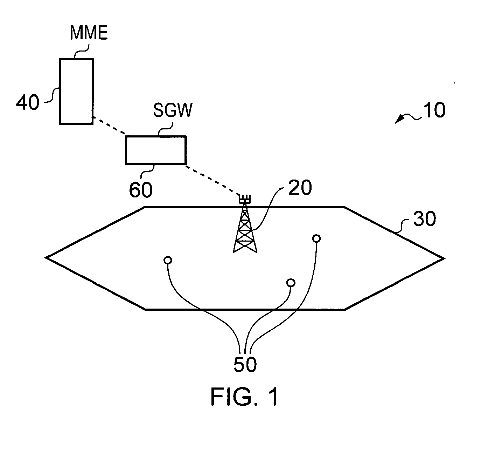

Figure 1 illustrates a wireless telecommunications system 10 according to one embodiment. User equipment 50 roam through the wireless telecommunications system. Base stations 20 are provided which support areas of radio coverage 30. A number of such base stations 20 are provided and are distributed geographically in order to provide a wide area of coverage to user equipment 50. When user equipment is within an area served by a base station 30, communications may be established between the user equipment and the base station over associated radio links. Each base station typically supports a number of sectors within the geographical area of service 30.

Typically a different antenna within a base station supports each associated sector. Accordingly, each base station 20 has multiple antennas and signals sent through the different antennas are electronically weighted to provide a sectorised approach. Of course, it will be appreciated that Figure 1 illustrates a small subset of the total number of user equipment and base stations that may be present in a typical communications system.

The wireless communications system is managed by Mobility Management Entity (MME). The MME 40 controls operation of the wireless communications system by communicating with a plurality of base stations via Serving Gateways (SGW) 60. The MME also communicates with user equipment 50 via each base station and thus effectively manages the wireless communications system.

MME 40 maintains location information which provides information on the location of user equipment 50 within the wireless communication system 10. For idle state users, this location information is only available with a granularity of the tracking are. The MME is operable to signal to SGW 60 to route data traffic through the telecommunications network, from a core network to user equipment and vice versa.

User equipment 50 typically transmits information and data to a base station 20 so that it can be re-routed within a wireless telecommunications network. User equipment may, for example, need to transmit data to the base station in order to relay text messages, voice information when a user is using the equipment to make a telephone call, or other data. The base station 20, in combination with parameters set by the MME 40, allocates resource to user equipment in a manner that aims to optimise operation of the wireless telecommunications network 10.

A radio link is a dedicated connection between user equipment 50 and a cell of a base station. These dedicated radio links are formed when user equipment is in an "RRC-Connected" state. When user equipment is not transmitting information such as text messages or voice information to a base station it is in a so-called "RRC-idle" state. When user equipment has information to transmit to a base station it initiates a RRC connection setup procedure to and switches to a connected state within which to operate. When in an "RRC-Connected" state user equipment is able to use high speed uplink packet access radio resources to achieve a high uplink throughput.

### RRC Connection Setup Procedure

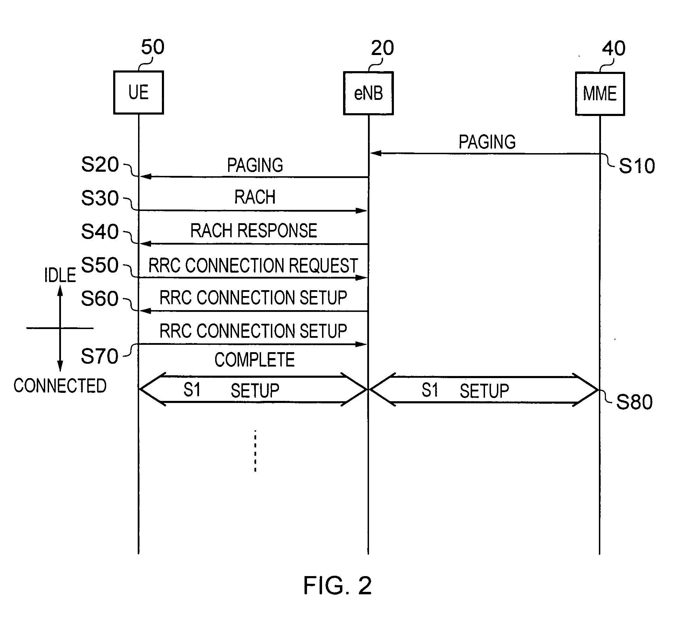

Figure 2 illustrates the main message flow of a conventional RRC connection setup procedure in more detail. In this example, an incoming call for the user equipment 50 has been received and the MME 40 transmits (via the serving gateway 60) a paging message to the base station 20 at step S10.

At step S20, the base station 20 transmits a paging message within its cells which is received by the idle state user equipment 50.

At step S30, the idle state user equipment 50 transmits a RACH message which is a random access message having a preamble selected from typically one of 64 different patterns.

At step S40, the base station 20 responds with a RACH response message.

At step S50, the user equipment 50 transmits an RRC connection request message which includes a cause value.

At step S60, the base station 20 transmits an RRC connection set-up message to the user equipment 50.

The user equipment then transitions to the connected state and, at step S70, the user equipment 50 transmits an RRC connection set-up complete message.

Thereafter, at step S80, the base station 20 transmits various messages relating to the set-up a connection using the S1 interface between the base station 20 and the MME 40 and transmits further subsequent messages between the base station 20 and the user equipment 50.

As will be explained in more detail below, an abridged, reduced or truncated RRC setup connection process is utilised in embodiments in order to provide a response from idle state user equipment to enable their presence to be detected and that truncated RRC setup connection procedure terminates prior to the S1 set-up occurring, in order to prevent unnecessary messaging between the base station 20 and the MME 40,

together with the associated allocation of resources. The use of such messaging and the allocation of such resources and signalling may be unnecessary simply to count the number of idle state user equipment within a cell for subsequent use by the network.

It will be appreciated that being able to count the number of idle state user equipment may have various uses to the network, such as, for example, determining areas of high density of user equipment, determining the presence of some types of user equipment or, as will be explained in more detail below, determining whether sufficient demand exists to activate a multimedia broadcast single frequency network mode for the transmission of multicast, multimedia content to user equipment.

### Multimedia Broadcast

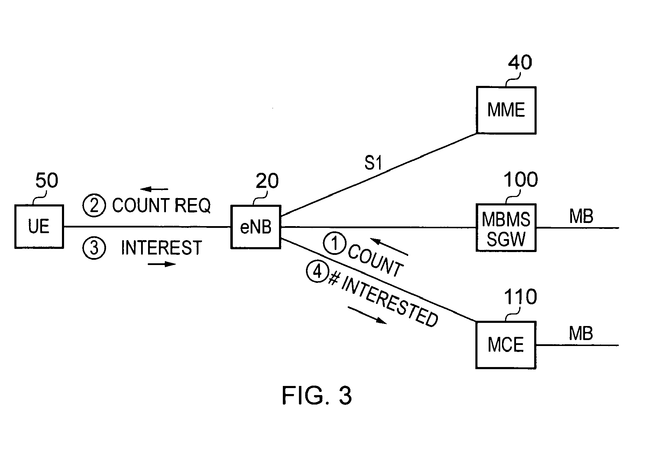

Figure 3 illustrates provision of multimedia broadcast within the wireless telecommunications network. As can be seen, a Multimedia Broadcast/Multicast Service (MBMS) serving gateway 100 is provided which receives the multimedia broadcast (MB), such as a TV stream. An MBMS Coordination Entity (MCE) 110 is also provided. In order to determine whether sufficient demand exists to activate a multimedia broadcast single frequency network (MBSFN) mode of operation in which a multicast message is transmitted within the cell to user equipment, it is useful to first determine whether sufficient demand for the multimedia broadcast exists. If no demand for the multimedia broadcast exists, then it would be wasteful of resources to perform such a multicast transmission. For example, if less than a pre-allocated threshold of user equipment wished to receive the multimedia broadcast, then it may be more efficient to provide unicast transmissions to each of those interested user equipment.

As shown in Figure 3, in order to determine the number of interested users, the MCE 110 sends a count request to the base station 20. The base station 20 then sends a count request to the user equipment within its cell. Those user equipment which are currently in the connected state will be able to respond to the count request if they have an interest in receiving the multimedia broadcast, but those user equipment which are in the idle state would typically need to perform the RRC setup procedure to enter the connected state in order to be able to express an interest.

As mentioned above, performing the complete RRC setup procedure for idle state user equipment would involve communication with the MME 40 and would require resources to be allocated to support the S1 interface between the base station 20 and the MME 40. As mentioned above, this may be wasteful of resources and may cause surging of signalling and the unnecessary block allocation of resources each time a multimedia broadcast occurs.

Accordingly, as will be explained in more detail below, a modified message, such as a modified paging message, is transmitted by the base station 20 in order to determine whether idle state user equipment wish to receive the multimedia broadcast. This modified paging message causes a truncated RRC setup procedure to be performed which enables the idle state user equipment to express interest in receiving the multimedia broadcast, but terminates prior to any configuration of the S1 interface occurring.

### Idle State User Equipment Count Overview

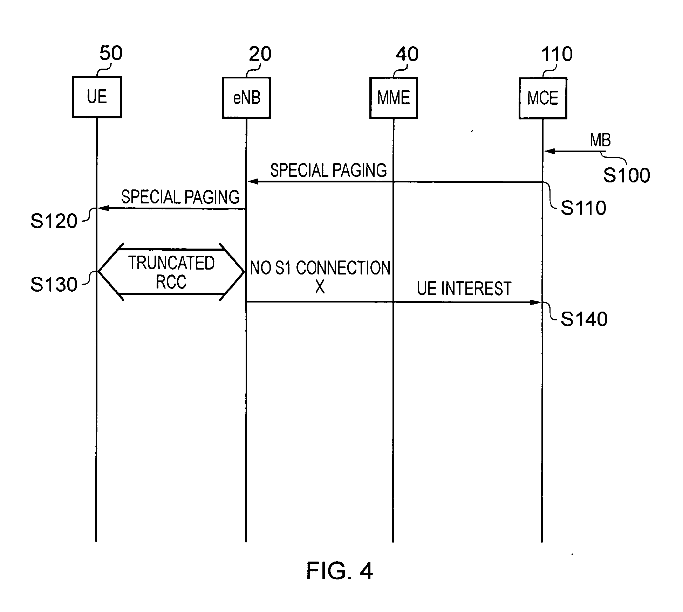

Figure 4 illustrates the general message flow when attempting count idle state user equipment to determine, for example, the interest of idle state user equipment in a multimedia broadcast. At step S100, the MCE 110 receives details of the multimedia broadcast.

At step S110, the MCE 110 sends a special paging message or a count request message, via the MBMS SGW 100 if required, to the base station 20.

On receipt of the special paging message, the base station 20 sends a special paging message or count request message at step S120 to user equipment within its cell. It will be appreciated that the exact configuration of the special paging message or count request message may be determined based on the particular network implementation and encoding availability within the paging message or count request message. The encoding identifies the special paging message or count request message so that both the base station 20 and the receiving user equipment 50 identify the message and perform the associated predefined subsequent procedures. The special paging message or count request message may, for example, encode details of the multimedia broadcast to enable the user equipment to determine whether or not they may wish to receive that multimedia broadcast. Alternatively, since the facility to encode information in a paging message or count request message may be limited, the base station 20 may transmit details of the multimedia broadcast on the multicast control channel (MCCH) and the user equipment 50 may, on receipt of the special paging message or count request message, determine information relating to the multimedia broadcast from the MCCH channel.

Should the user equipment determine that it is not interested in receiving the multimedia broadcast, then no further action is taken. However, should the user equipment wish to express an interest in receiving the multimedia broadcast, then at step S130, a truncated RRC setup procedure is activated. As will be explained in more detail below, the truncated RRC setup procedure may be implemented in a number of different ways, but in each case the truncated RRC setup procedure enables the user equipment to express an interest in receiving the multimedia broadcast and the procedure terminates prior to any S1 interface configuration or communication occurring. The user equipment may then remain in the idle state.

As mentioned above, the base station 20 may determine whether connected user equipment wish to receive the multimedia broadcast in the conventional way. Once those responses, together with responses from idle state user equipment, have been received, then at step S 140 the base station 20 will signal the MCE 110 to indicate the number of user equipment within the cell which expressed an interest in receiving the multimedia broadcast. The MCE 110 may then, in conjunction with other network nodes if required, determine whether to provision an MBSFN mode of operation within the cell, whether to perform unicast transmissions, or whether to provide no transmissions at all.

Three different example truncated RRC setup procedures will now be explained.

### Example 1- RACH Indication

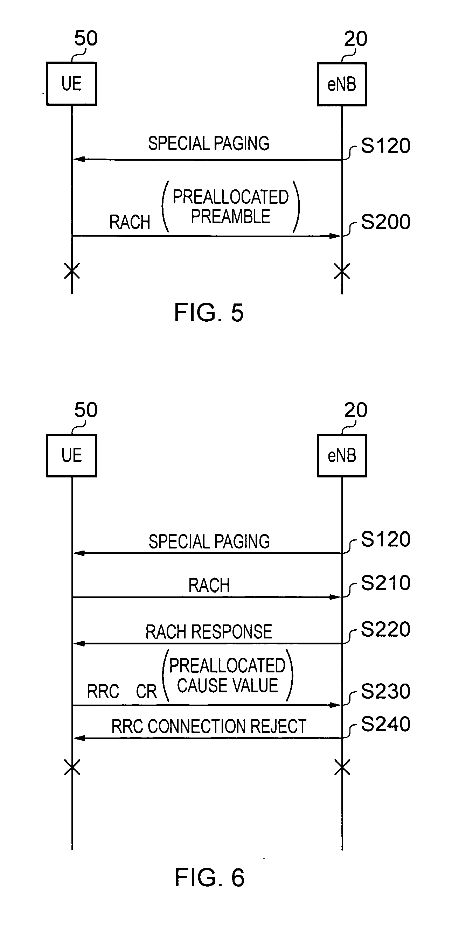

Figure 5 illustrates an example arrangement showing the truncated RRC setup procedure according to one embodiment. As can be seen, the special paging message or count request message is sent at step S 120 between the base station 20 and the user equipment 50. If the idle state user equipment does not wish to express an interest in receiving the multimedia broadcast, then no further processing occurs. However, if the idle state user equipment has an interest in receiving the multimedia broadcast, then the user equipment 50 is configured to transmit, at step S200, a RACH having a pre-allocated preamble reserved for responding to the special paging message or count request message. The idle state user equipment 50 then terminates the RRC setup procedure.

On receipt of the RACH having the pre-allocated preamble, the base station 20 identifies that this message is from an idle state user equipment responding to the special paging message or count request message. The base station 20 can then add this response to its count and will also terminate the RRC setup procedure at that stage. Hence, the rejection happens at the time of RACH access. For example, by using a dedicated preamble, the base station will be able to recognize that the RACH access is related to an MBMS counting while rejecting or not progressing the access further.

Accordingly, it can be seen that with only one message the idle state user equipment is able to signal that it is interested in receiving the multimedia broadcast. However, it will be appreciated that this approach may be somewhat limited, as the number of preambles that may be specifically allocated may be small and this approach can typically only be used to provide a count for one service at a time.

### Example 2 - Cause Value Indication

Figure 6 illustrates an example truncated RRC setup procedure according to one embodiment. This embodiment uses a pre-allocated cause value transmitted in a RRC request message to indicate to the base station 20 that an idle state user equipment 50 is interested in receiving a multimedia broadcast.

As can be seen at step S 120, the special paging message or count request message is transmitted from the base station 20 to the idle state user equipment. If the idle state user equipment does not wish to express an interest in receiving the multimedia broadcast, then no further processing occurs. However, if the idle state user equipment is interested in receiving the multimedia broadcast, then at step S210 a RACH message is transmitted to the base station 20. At step S210, the base station 20 sends a RACH response message to the idle state user equipment.

The idle state user equipment 50 is configured to then transmit at step S230 an RRC connection request message having a pre-allocated cause value. It will be appreciated that a number of currently unallocated cause values may be utilised to identify that this message is in response to the special paging message or count request message and indicates that the idle state user equipment 50 is interested in receiving the multimedia broadcast. However, since the number of available cause values are typically limited, it is likely that only one cause value may be available which also may also mean that this approach can typically only be used to provide a count for one service at a time. Although this embodiment uses the cause value, it will be appreciated that this indication could be encoded elsewhere within the RRC connection request message.

At step S240, the base station 20 then transmits an RRC connection reject message to the idle state user equipment and the RRC setup procedure terminates. Although in this embodiment an RRC connection reject message is transmitted, it will be appreciated that both the idle state user equipment 50 and the base station 20 could instead be configured to simply terminate the RRC setup procedure following the transmission and receipt of the RRC connection request message at step S230.

Hence, when receiving this message including a specific spare cause value for example, the base station will note that the user equipment is interested in an eMBMS service and the base station can then reject the setup of the RRC connection by sending an RRC Connection Reject message.

### Example 3 - RRC Set-Up Complete Indication

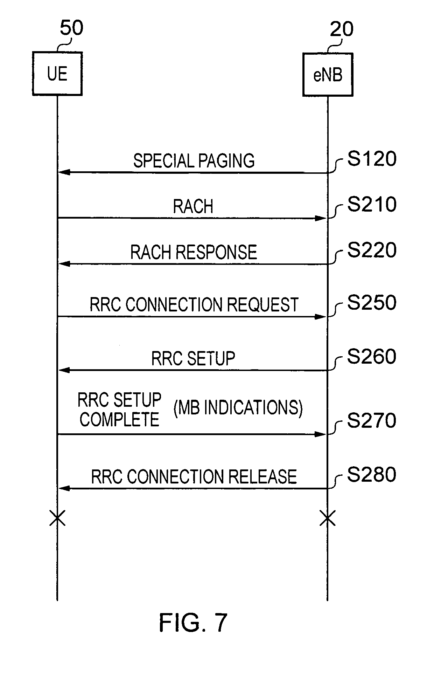

Figure 7 illustrates a truncated RRC setup procedure according to one embodiment. In this embodiment, an RRC set-up complete message is utilised to encode an indication of the multimedia broadcast services which are of interest to the idle state user equipment 50.

As can be seen at step S 120, the special paging message is transmitted from the base station 20 to the idle state user equipment. If the idle state user equipment does not wish to express an interest in receiving the multimedia broadcast, then no further processing occurs. However, if the idle state user equipment is interested in receiving the multimedia broadcast or broadcasts either indicated in the special paging message or on the MCCH, then at step S210 a RACH message is transmitted to the base station 20. At step S210, the base station 20 sends a RACH response message to the idle state user equipment.

At step S250, the user equipment 50 transmits an RRC connection request message to the base station 20. At step S260, the base station 20 responds with an RRC set-up message transmitted to the idle state user equipment 50.

At step S270, the user equipment 50 is configured to provide an RRC set-up complete message which encodes an indication of the multimedia broadcast or broadcasts which are of interest to the idle state user equipment 50.

At step S280, the base station 20 terminates the truncated RRC setup procedure by transmitting an RRC release message to the idle state user equipment 50. Both the idle state user equipment 50 and the base station 20 terminate the RRC setup procedure. Although in this embodiment an RRC release message is transmitted at step S280, it will be appreciated that both the idle state user equipment 50 and the base station 20 may be configured to terminate the truncated RRC setup procedure following step S270.

This approach uses a special paging for idle user equipment triggered from the base station upon counting request received from the MCE but without any request or involvement of the MME. The user equipment establish the RRC connection with a special indication upon which the base station will not trigger any S1 message but will use the response in its counting process. The base station then immediately releases the RRC connection by its own. After collecting potentially the response of several user equipment in a similar manner, at the end of the process the base station further informs the MCE of the counting result achieved in each cell.

Accordingly, it can been seen from embodiments that it is highly beneficial if the counting can remain a pure RAN function, triggered and interpreted by the MCE, without involving the MME. It is therefore proposed to introduce a special RRC connection which involves a paging function and RRC connection from the base station that does not involve the S1 interface and does not involve the MME. This paging function over the radio is expected to get some of the user equipment into RRC connected mode or trying to get into connected mode, but without creating an associated S1 context and involving the MME. This contrary to the model adopted so far by 3GPP for LTE for which an RRC connection is normally associated with an S1 connection including a security association and a default bearer. However, the idea is that this is a special handling reserved for MBMS counting whereby these temporary RRC connections are immediately released once the counting in base station is fulfilled or these RRC connections do not even go up to completion.

Embodiment provide the unique benefit of allowing precise counting of user equipment interested in a given MBMS service including not only the user equipment which are in RRC connected mode at the time the base station receives the counting request from the MCE, but also including the user equipment which are in idle mode at that time. The rejection of the RRC connection at early stage allows MBMS interested user equipment to be recognized while not going up to the completion of RRC connection establishment and therefore not involving S1 and the MME leading to a considerable signalling reduction. Accordingly, embodiments provide the advantage over existing solutions by not involving the MME and the S1 interface but keeping the counting function within RAN under the control of the MCE.

A person of skill in the art would readily recognise that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown. The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method, comprising, at a base station, the steps of:
(i) in response to a request to determine presence of idle state user equipment within a cell provided by said base station, transmitting a first message within said cell, said first message encoding an indication to said idle state user equipment to commence a truncated radio resource connection (RRC) setup procedure;
(ii) determining presence of said idle state user equipment from a second message received from said idle state user equipment commencing said truncated radio resource connection (RRC) procedure; and
(iii) in response to said second message, terminating said truncated radio resource connection (RRC) procedure to prevent setup of a connection with a core network.

2. The method of claim 1, wherein said step (i) comprises the step of, in response to a request to determine presence of idle state user equipment within a cell requiring provision of at least one service to be provided by said base station, transmitting said first message within said cell, said first message encoding an indication of said at least one service to be provided to said idle state user equipment and said step (ii) comprises the step of determining presence of said idle state user equipment requiring provision of said at least one service from said second message.

3. The method of claim 2, wherein said first message comprises an indication that another channel provides said indication of said at least one service to be provided to said idle state user equipment.

4. The method of any preceding claim, wherein said second message comprises a random access channel RACH message having a pre-allocated preamble indicating commencement of said truncated radio resource connection (RRC) setup procedure.

5. The method of claim 4, wherein said step (iii) comprises the step of terminating said truncated radio resource connection (RRC) procedure in response to receipt of said RACH message having said pre-allocated preamble.

6. The method of any one of claims 1 to 3, wherein said second message comprises a radio resource connection (RRC) connection request message encoding an indication that said radio resource connection (RRC) connection request message was generated in response to said first message.

7. The method of claim 6, wherein said indication encoded in said radio resource connection (RRC) connection request message comprises a pre-allocated cause value.

8. The method of claim 6 or 7, wherein said step (iii) comprises the step of terminating said truncated radio resource connection (RRC) procedure by transmitting a radio resource connection (RRC) connection reject message in response to receipt of said radio resource connection (RRC) connection request message encoding said indication that said radio resource connection (RRC) connection request message was generated in response to said first message.

9. The method of any one of claims 1 to 3, wherein said second message comprises a radio resource connection (RRC) setup complete message encoding an indication that said radio resource connection (RRC) setup complete message was generated in response to said first message.

10. The method of claim 9, wherein said step (i) comprises the step of, in response to a request to determine presence of idle state user equipment within a cell requiring provision of a plurality of services to be provided by said base station, transmitting said first message within said cell, said first message encoding an indication of said plurality of services to be provided to said idle state user equipment, and wherein said indication encoded in said radio resource connection (RRC) setup complete message comprises an indication of those of said plurality of services required by said idle state user equipment.

11. The method of claim 9 or 10, wherein said step (iii) comprises the step of terminating said truncated radio resource connection (RRC) setup procedure by transmitting a radio resource connection (RRC) connection release message in response to receipt of said radio resource connection (RRC) setup complete message encoding said indication that said radio resource connection (RRC) setup complete message was generated in response to said first message.

12. The method of any preceding claim, wherein said first message comprises a paging message.

13. A base station, comprising:
transmission logic operable, in response to a request to determine presence of idle state user equipment within a cell provided by said base station, to transmit a first message within said cell, said first message encoding an indication to said idle state user equipment to commence a truncated radio resource connection (RRC) setup procedure;
determining logic operable to determine presence of said idle state user equipment from a second message received from said idle state user equipment commencing said truncated radio resource connection (RRC) setup procedure; and
termination logic operable, in response to said second message, to terminate said truncated radio resource connection (RRC) procedure to prevent a connection with a core network being established.

14. A method, comprising, at user equipment, the steps of:
(i) receiving a first message encoding an indication to commence a truncated radio resource connection (RRC) setup procedure;
(ii) commencing said truncated radio resource connection (RRC) setup procedure; and
(iii) transmitting a second message indicating commencement of said truncated radio resource connection (RRC) setup procedure.

15. User equipment comprising:
reception logic operable to receive a first message encoding an indication to commence a truncated radio resource connection (RRC) setup procedure;
radio resource connection logic operable to commence said truncated radio resource connection (RRC) setup procedure in response to receipt of said first message; and
transmission logic operable to transmit a second message indicating commencement of said truncated radio resource connection (RRC) setup procedure.
